# EUROPEAN PATENT SPECIFICATION

(11) **EP 4 025 626 B1**
(45) Date of publication and mention of the grant of the patent: **27.09.2023**
(21) Application number: 20764381.8
(22) Date of filing: 31.08.2020
(51) Int. Cl.: C08G 63/682, C09D 167/04, C08G 63/664

(54) **COATING COMPOSITION WITH EASY-CLEAN PERFORMANCE**
BESCHICHTUNGSZUSAMMENSETZUNG MIT LEICHT ZU REINIGENDER LEISTUNG
COMPOSITION DE REVÊTEMENT À PERFORMANCE DE NETTOYAGE FACILE

(30) Priority: 03.09.2019 WO PCT/CN2019/104216; 23.09.2019 EP 19198925
(43) Date of publication of application: 13.07.2022
(73) Proprietor: Akzo Nobel Coatings International B.V., 1077 WW Amsterdam (NL)
(72) Inventor: WANG, Jianhui, Shanghai 201600 (CN); XU, Zhenglin, Shanghai 201600 (CN); LV, Xin, Shanghai 201600 (CN); XIE, Lizhu, Shanghai 201600 (CN); DU, Zhengzhen, Shanghai 201600 (CN); LUO, Yong, Shanghai 201600 (CN); SHAO, Limin, Shanghai 201600 (CN)
(74) Representative: Akzo Nobel IP Department
(86) International application number: PCT/EP2020/074225
(87) International publication number: WO 2021/043717

(56) References cited:
- EP-A2- 0 622 391
- US-A1- 2019 062 497

## Description

### Field of the invention

The present invention relates to a coating composition with easy-clean performance. Such coatings are particularly useful in the fields of consumer electronics, automotive interiors and exterior and interior building design.

### Background

In the field of consumer electronic devices such as cellular phones, tablets, laptops, and automotive interiors various substrates are used, such as plastics, metal and glass. It is often desired to cover these substrates with easy-clean and stain resistant coatings. Easy-clean means that that the surface is repellent to water, oil and/or dirt. Easy-clean coatings reduce or eliminate the need to clean the surface. Easy-clean coating compositions comprising fluoropolymers are known for example from US2019/0062497.

It is known in the art that fluorinated polymers, particularly, perfluoropolyether (PFPE), have non-stick and lubricating properties and can be used to create easy-clean coatings. However, they are difficult to incorporate in coating compositions as they have low compatibility with other resins such as polyesters, polyacrylates, polyurethanes. It is also difficult to find a suitable solvent as they are only soluble in halogen-containing solvents.

There is a need to provide easy-clean coating compositions. It is also desired that the coatings are durable and can withstand abrasion. It is further desired that the coating adheres well to substrates used in exterior and interior design, consumer electronics or automotive industries, particularly to metal and plastic substrates.

### Summary of the invention

In order to address the above-mentioned desires, the present invention provides, in a first aspect, a hydroxyl-functional polyester containing a perfluoropolyether block prepared by a method comprising the following steps:
a) subjecting a carboxyl-terminated perfluoropolyether C to a reaction with an epoxy-functional compound D, and
b) subjecting the reaction product of step a) to a reaction with a lactone E.

In a further aspect, the invention provides a coating composition, comprising:
(a) the polyester according to any one of claims 1-9,
(b) an OH-functional or epoxy-functional resin, and
(c) a hardener comprising groups reactive to the OH or epoxy-functional groups of resin (b).

The invention also provides a method of coating a substrate comprising applying the coating composition according to the invention to a substrate and curing the coating composition.

In yet another aspect, the present invention provides a coated substrate obtained according to the invention.

### Brief description of the drawings

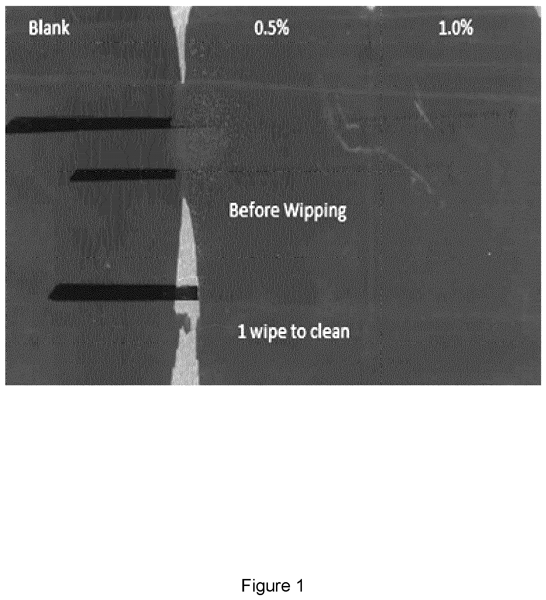

Figure 1 shows the results of the easy clean test for three coated panels: comparative (left panel), and according to the invention (middle and right panels).

### Detailed description of the invention

The polymer used in the present invention is a hydroxyl-functional polyester containing a perfluoropolyether (PFPE) block. It can be prepared by a method comprising the following steps.

In step (a), a carboxyl-terminated perfluoropolyether C is reacted with an epoxy-functional compound D.

Carboxyl-terminated perfluoropolyethers C are also known as PFPE acids, or perfluoropolyethers with carboxylic end groups. These are commercially available, e.g. under the name Fluorolink^{®} from Solvay, or can be prepared from a hydroxy-terminated perfluoropolyethers A.

Carboxyl-terminated perfluoropolyethers C can be prepared by subjecting a hydroxy-terminated perfluoropolyether A to a condensation reaction with a multifunctional anhydride B with a functionality of at least 2.

Hydroxy-terminated perfluoropolyether A preferably has a number average molecular weight of from 400 to 3000. Mn of polymers can in general be determined by gel permeation chromatography (GPC) using a polystyrene standard with tetrahydrofuran as the mobile phase. In this case, however, PFPE might not be easy to dissolve in tetrahydrofuran, therefore the Mn as given by the supplier is relied upon.

Hydroxy-terminated perfluoropolyether A can have a general structure HO-(CF₂-CF₂-O)ₙ-OH or HO-(CF₂-CF₂-O)ₙ-(CF₂-O)ₘ-OH. It can also include blocks with ethylene oxide units and have the general structure:

HO-(CH₂CH₂O)ₚ-CH₂-CF₂-R_{f}-CF₂-CH₂-(OCH₂CH₂)_{q}-OH

wherein p and q are integers independently chosen from 0 to 50, preferably from 1 to 50, wherein R_{f} represents a bifunctional radical having perfluoropolyether structure (CF₂CF₂O)ₙ, (CF₂O)ₘ or (CF₂-CF₂-O)ₙ-(CF₂-O)ₘ, and wherein n and m are integers independently chosen from 1 to 100.

Hydroxy-terminated perfluoropolyethers are commercially available from Solvay as Fluorolink^{®} PFPE, or Fomblin^{®} PFPE, e.g. Fluorolink^{®} 5174X, Fluorolink^{®} E10H, Fluorolink^{®} PEG45.

Multifunctional anhydride B preferably has functionality of at least 2. Examples include phthalic anhydride, hexahydrophthalic anhydride, isophthalic anhydride, terephthalic anhydride, glutaric anhydride, 1,2-cyclohexanedicarboxylic anhydride, 4-methyl-1,2-cyclohexanedicarboxylic anhydride and their (alkyl) derivatives.

More preferably, multifunctional anhydride B has a functionality of at least 3. Examples of suitable compounds B include trimellitic anhydride, hydrogenated trimellitic anhydride, cis-aconitic anhydride, pyromellitic anhydride and their respective acids. Preferably, compound B is a tri-functional anhydride, particularly trimellitic anhydride or hydrogenated trimellitic anhydride.

The reaction with compound B can be carried out in the presence of a catalyst. Conventional esterification catalysts known in the art can be used. Preferably, the reaction is carried out in the presence of a metal catalyst, e.g. an organotin compound. More preferably, the catalyst is dibutyltin dilaurate (DBTDL). Other metal catalysts can also be used, such as stannous octoate, zirconium or titanium-based catalysts. The catalyst can be used in an amount from 0.01 to 5 wt.%, or from 0.1 to 1 wt.%, based on the total weight of the reactants excluding solvents.

The reaction with compound B preferably takes place in an organic solvent or a mixture of solvents. Any suitable solvent, non-reactive to the reactants can be used. Examples include esters (such as ethyl acetate, propyl acetate), aromatic solvents (such as toluene), ketone solvents (such as acetone, methyl ethyl ketone, methyl isobutyl ketone, cyclohexanone); aliphatic hydrocarbons; ethers (such as diethyl ether, tetrahydrofuran, diethylene glycol dimethyl ether) and mixtures thereof. Preferred organic solvents include butyl acetate, methyl isobutyl ketone (MIBK), methoxy propyl acetate (PMA), diethylene glycol dimethyl ether or mixtures thereof.

Skilled person is able to determine suitable conditions for reaction with compound B. Typically, the synthesis is done in an inert atmosphere, under strong stirring, for a time sufficient for the complete conversion of the hydroxy-terminated PFPE. The temperature during the synthesis is typically in the range 80-150°C.

It is important to use suitable amounts of the reagents so that the resulting carboxyl-terminated perfluoropolyether C has carboxyl functionality. This is achieved, e.g. by using a relative excess of anhydride B. Preferably, the molar ratio of compound B to compound A is from 1:1 to 3:1.

Preferably, the acid value of the carboxyl-terminated perfluoropolyether C is in the range 10-50 mg KOH/g. The acid value can be measured by potentiometric titration, e.g. in accordance with DIN EN ISO 3682.

Preferably, the epoxy-functional compound D is a glycidyl ether or glycidyl ester. Particularly, suitable glycidyl esters include glycidyl esters of C1-C16 carboxylic acids. Most preferred is the glycidyl ester of versatic acid, commercially available as Cardura E10P from Hexion Chemicals. Suitable glycidyl ethers include alkyl glycidyl ethers, such as C1-C16 alkyl glycidyl ethers, e.g. methyl glycidyl ether, butyl glycidyl ether, octyl glycidyl ether, decyl glycidyl ether, dodecyl glycidyl ether, lauryl glycidyl ether, and aryl glycidyl ethers, such as phenyl glycidyl ether and benzyl glycidyl ether. Preferably, compound D is glycidyl ester of versatic acid. Preferably, the epoxy-functional compound D has molecular weight not higher than 500.

Skilled person is able to determine suitable conditions for reaction with compound D. The temperature during the reaction is typically in the range 80-160°C. The progress of the reaction is monitored by analyzing the acid value over time. The reaction is preferably stopped when the acid value is below 10 mg KOH/g. The reaction product hence preferably has an acid value in the range 0-8 mg KOH/g, more preferably the acid value is 0 mg KOH/g.

In step b), the reaction product of step a) is subjected to reaction with a lactone E. During the reaction, the secondary hydroxyl group of the reaction product of step a) reacts with the lactone and opens the ring, thereby creating a primary hydroxyl group. This group can further react with another molecule of lactone and so on, creating a polymer chain, ending with a primary hydroxyl group.

Compound E is a lactone, i.e. a cyclic carboxylic ester of a hydroxycarboxylic acid. The lactone is preferably a γ-lactone, δ-lactone, or ε-lactone, more preferably ε-lactone. Suitable lactones include γ-butyrolactone; γ-valerolactone; δ-valerolactone; monomethyl-δ-valerolactone; monoethyl-δ-valerolactone; monohexyl-δ-valerolactone; ε-caprolactone; monomethyl-ε-caprolactone; monoethyl-ε-caprolactone; monohexyl-ε-caprolactone; dimethyl-ε-caprolactone; di-n-propyl-ε-caprolactone; di-n-hexyl-ε-caprolactone; trimethyl-ε-caprolactone; triethyl-ε-caprolactone; pivalolactone; and, 5-methyloxepan-2-one. Preferably, ε-caprolactone or a derivative thereof is used, such as monomethyl-ε-caprolactone, monoethyl-ε-caprolactone or monohexyl-ε-caprolactone, more preferably ε-caprolactone.

Skilled person is able to determine suitable conditions for the reaction with lactone E. The temperature during the reaction is typically in the range 100-220°C, the time 1-10 hours.

The molar ratio of lactone E to the reaction product of reaction (a) is preferably in the range from 1:1 to 20:1, more preferably from 2:1 to 15:1, or in the range from 2:1 to 10:1.

The resulting hydroxyl-functional polyester preferably has a weight average molecular weight Mw in the range 1,000-10,000, more preferably in the range 2,000-7,000, as determined by gel permeation chromatography (GPC) versus a polystyrene standard with tetrahydrofuran as the mobile phase. The polyester preferably has an acid value under 8 mg KOH/g, preferably in the range 0-5 mg KOH/g. More preferably, the acid value is 0 mg KOH/g resin. The acid value can be measured by potentiometric titration, e.g. in accordance with DIN EN ISO 3682.

Preferably, the OH value of the resulting hydroxyl-functional polyester is in the range 10-150 mg KOH/g resin, more preferably in the range 30-110 mg KOH/g resin. The hydroxyl number can be measured by potentiometric titration using the TSI method, e.g. according to ASTM E1899-08. The acid value is preferably below 10 mg KOH/g.

The obtained OH-functional polyester can be used in preparation of coating compositions.

### Coating composition

In another aspect, the present invention provides a coating composition comprising (a) the above-described polyester, (b) an OH-functional or epoxy-functional resin and (c) a hardener comprising functional groups reactive to the hydroxyl or epoxy groups of the resin (b).

The resin (b) can be an OH-functional resin, e.g. polyester, polyacrylate, polyurethane, or alkyd. It can also be an epoxy resin. Suitable commercially available resins include Dynapol^{®} resins from Evonik, Uralac^{®} resins from DSM, Duroftal^{®} resins from Allnex. Preferably, resin (b) is a saturated polyester.

The OH-functional resin (b) preferably has a hydroxyl value of 10-150 mg KOH/g, more preferably 20-100 mg KOH/g.

Preferably, the resin (b) is present in an amount 10-99 wt.%, more preferably 20-90 wt.%, yet more preferably 40-80 wt.% based on the total weight of the coating composition.

The hardener (c) can for example comprise an isocyanate-functional compound, an amino resin or a phenolic resin. Preferably, the hardener is an amino resin, more preferably a melamine resin. Such hardeners are well known to a person skilled in the art and commercially available, e.g. Cymel^{®} 300, Cymel^{®} 301, Cymel^{®} 303, Cymel^{®} 304, Cymel^{®} 3745 from Allnex. The hardener can be present in a suitable amount depending on the amount of the resins to be crosslinked. Generally, the amount of the hardener is in the range 1-30 wt.%, preferably 5-20 wt.% based on the total weight of the coating composition.

The polyester of the invention is preferably present in an amount 0.1-10 wt.%, or 0.5-5 wt.% on the total weight of the coating composition.

The coating composition can further comprise a catalyst for the reaction of the functional groups of the resin(s) with the hardener. Such catalysts are known to the skilled person. Preferably, an acidic catalyst used, such as those based on sulfonic acid and its derivatives. Examples of these catalysts include p-toluene sulfonic acid, dinonyl naphthalene disulfonic acid, dodecyl benzene sulfonic acid (DDBSA), dinonyl naphthalene monosulfonic acid. More preferably the catalyst is p-toluenesulfonic acid. The catalyst is preferably present in an amount 0.01-5 wt.% based on the total weight of the coating composition.

The coating composition is preferably solventborne. Solventborne coating compositions comprise an organic solvent or a mixture of organic solvents as the major liquid phase when preparing and/or applying the coating composition. "Major liquid phase" means that organic solvents constitute at least 50 wt.% of the liquid phase, preferably at least 80 wt.%, more preferably at least 90 wt.%, in some embodiments even 100 wt.%.

The coating composition preferably comprises 10-70 wt.%, more preferably 20-60 wt.% of organic solvents, based on the total weight of the coating composition.

Example of suitable organic solvents include esters (such as ethyl acetate, propyl acetate), aromatic solvents (such as toluene), ketone solvents (such as acetone, methyl ethyl ketone, methyl isobutyl ketone, cyclohexanone, diacetone alcohol); aliphatic hydrocarbons; chlorinated hydrocarbons (such as CH₂Cl₂); ethers (such as diethyl ether, tetrahydrofuran, propylene glycol monomethyl ether, diethylene glycol dimethyl ether, ethylene glycol monobutyl ether) and mixtures thereof. Preferred organic solvents include butyl acetate, methyl isobutyl ketone (MIBK), methyl ethyl ketone (MEK), propylene glycol monomethyl ether, methoxy propyl acetate (PMA), ethylene glycol monobutyl ether and mixtures thereof.

The solid content of the coating composition according to the invention can be in the range from 10 to 90 wt.%, preferably 15 to 80 wt.%, more preferably 20 to 70 wt.%.

The coating composition is preferably provided in the form of a 2K coating composition. "2K coating composition" is a known concept in the art of coatings. This means that the coating composition is provided in the form of separate components, which are due to reactivity only mixed shortly before the application to a substrate. Particularly, the hardener (c) is preferably provided as a separate component.

The coating composition can further comprise conventional additives, such as fillers, antioxidants, matting agents, pigments, anti-corrosion agents, abrasion resistant particles, flow control agents, dispersants, surfactants, plasticizers, adhesion promotors, thixotropic agents, light stabilizers and others.

The present invention further provides a method of coating a substrate, comprising applying the coating composition according to the invention to a substrate and curing the coating composition.

Curing of the coating composition can be done at ambient conditions, e.g. room temperature. Room temperature is understood here as from 15 to 30°C.

The curing can also be accelerated by heating. The exact temperature will depend on the particular combination of the resin (b) and the hardener (c) being used. The coated substrate can be heated to a temperature in the range 40-100°C, more preferably 50-80°C. Conventional methods can be used, e.g. placing in an oven.

In some applications, e.g. coil coating, the heating can be done to much higher temperatures, e.g. 150-300°C. The peak metal temperature (PMT) can for example be in the range 180-250°C.

The coating composition can be applied onto a substrate by conventional techniques including spraying, rolling, blade-coating, pouring, brushing or dipping.

The coating composition according to the present invention can be applied to a wide range of substrates including metallic and non-metallic substrates. Suitable non-metallic substrates include polycarbonate acrylonitrile butadiene styrene (PC/ABS), polycarbonate, polyacrylate, polyolefin, polyamide, polystyrene, glass, wood, stone, and the like. The coating composition can also be used on metallic substrates such as steel, aluminium, zinc/aluminium alloys.

The coating composition according to the present invention can be used as a single layer applied directly to the substrate, or in multilayer systems, e.g. as a primer or topcoat, including basecoat and clearcoat.

The coating composition according to the present invention can be used in various industries, such as building panels, interior panels, consumer electronics, automotive, packaging, wood flooring and furniture, home appliance, glass and windows, sports equipment.

The present invention further provides a substrate coated with the coating obtained from the coating composition of the invention. The coatings according to the present invention have exceptionally good general properties including adhesion and abrasion resistance. In addition, the coatings also have excellent easy clean properties as can be tested with a permanent marker pen.

### Examples

The invention will be demonstrated with reference to the following examples. All parts and percentages are by weight unless specified otherwise.
Fluorolink E10H - hydroxyl-functional PFPE polymer from Solvay
TMA - trimellitic anhydride from Shanghai Macklin Biochemical
Cardura E10P - glycidyl ester of versatic acid from Hexion Chemicals
Resin 3261 - alkyd resin from Shanghai Zhongqu Chemical Industry (solids content 58-62%, acid value < 8 mg KOH/g, hydroxyl value 45 mg KOH/g)
Cymel 303 - melamine crosslinker from Allnex
Byk 190 - wetting and dispersing additive from Byk
BCS - butyl cellosolve solvent from Dow Chemical

### Example 1. Preparation of polyester

A mixture of 0.1 parts dibutyltin dilaurate, 33.3 parts diethylene glycol dimethyl ether, 26.8 parts Fluorolink E10H and 6.7 parts TMA are added to a reactor, stirred and heated to 120°C under nitrogen atmosphere. The reaction is allowed to proceed until the solution is clear. 21.6 parts of Cardura E10P is added to the reaction mixture and the temperature is raised to 130°C. The reaction is allowed to proceed until the acid value is below 8 mg KOH/g. 11.5 parts of ε-caprolactone is added to the reactor and the temperature is raised to 160°C. The reaction is allowed to proceed for 4 hours, after which the reaction mixture is cooled down to 50°C.

The resulting polyester has Mn of 3768, acid value below 8 mg KOH/g and OH value of 59.6 mg KOH/g on solid. The solid content of the solution is 66.6 wt.%.

### Example 2. Preparation of a coating composition

Three coating compositions have been prepared using the polyester synthesized in Example 1 as an additive, present in amounts 0% (comparative), 0.5 wt.% and 1 wt.%. The amounts are given in Table 1 in parts by weight.

**Table 1**

| | | 0% additive | 0.5% additive | 1% additive |
|---|---|---|---|---|
| Base resin | Resin 3261 | 68 | 68 | 68 |
| Hardener | Cymel 303 | 12 | 12 | 12 |
| Catalyst | p-toluenesulfonic acid | 0.2 | 0.2 | 0.2 |
| Pigment | Cobalt chromite | 8 | 8 | 8 |
| Filler | TiO2 | 4 | 4 | 4 |
| Dispersant | BYK190 | 0.2 | 0.2 | 0.2 |
| | Polyester of Example 1 | 0 | 0.5 | 1.0 |
| Solvent | BCS | 7.6 | 7.1 | 6.6 |
| | | 100 | 100 | 100 |

### Example 3. Coated panels

A panel AZ100 (zinc/aluminium alloy-coated steel) is first coated with a commercial Cr-free primer APW9R406445 from AkzoNobel to a dry film thickness of 5 µm, by RDS 12" coating thickness wire bar. The coating compositions prepared in Example 2 were applied as a topcoat to a dry film thickness of 15 µm by RDS 22" coating thickness wire bar. The panel is then baked in an oven at 270°C for 33 sec, at peak metal temperature 232°C.

### Example 4. Tests

For the easy clean properties testing, a ZEBRA brand permanent marker pen is used. The pen is used to draw three lines on the coated surface. The surface is then wiped off with a cloth. The results of the tests are shown in Figure 1.

On the comparative panel coated without the easy-clean additive the lines cannot be wiped off.

On the panels coated using 0.5% and 1.0% of the easy-clean additive according to the present invention, the lines shrank after drawing and are hardly visible. The ink can be easily wiped off with the cloth. After wiping, no residue is left on the surface and not lines are visible.

## Claims

1. Hydroxyl-functional polyester containing a perfluoropolyether block prepared by a method comprising the following steps:
(a) subjecting a carboxyl-terminated perfluoropolyether C to a reaction with an epoxy-functional compound D, and
(b) subjecting the reaction product of step a) to a reaction with a lactone E.

2. The polyester according to claim 1, wherein the carboxyl-terminated perfluoropolyether C is obtained by subjecting a hydroxy-terminated perfluoropolyether A to a condensation reaction with compound B, which is a multifunctional anhydride with a functionality of at least 2.

3. The polyester according to claim 2, wherein compound A has a general structure
HO-(CH₂CH₂O)ₚ-CH₂-CF₂-R_{f}-CF₂-CH₂-(OCH₂CH₂)_{q}-OH
wherein p and q are integers independently chosen from 0 to 50, R_{f} represents a bifunctional radical having perfluoropolyether structure (CF₂CF₂O)ₙ, (CF₂O)ₘ or (CF₂-CF₂-O)ₙ-(CF₂-O)ₘ, wherein n and m are integers independently chosen from 1 to 100.

4. The polyester according to any one of claims 2-3, wherein compound B is trimellitic anhydride or hydrogenated trimellitic anhydride.

5. The polyester according to any one of claims 1-4, wherein carboxyl-functional perfluoropolyether C has an acid value in the range 10-50 mg KOH/ g, measured by potentiometric titration in accordance with DIN EN ISO 3682.

6. The polyester according to any one of claims 1-5, wherein the epoxy-functional compound D is a glycidyl ether or glycidyl ester.

7. The polyester according to any one of claims 1-6, wherein compound E is a γ-lactone, δ-lactone, or ε-lactone.

8. The polyester according to claim 7, wherein compound E is ε-caprtolactone.

9. The polyester according to any one of claims 1-7, wherein the hydroxyl-functional polyester has an OH value of 10-150 mg KOH/g resin, measured by potentiometric titration using the TSI method in accordance with ASTM E1899-08.

10. A coating composition, comprising:
(a) the polyester according to any one of claims 1-9,
(b) an OH-functional or epoxy-functional resin, and
(c) a hardener comprising groups reactive to the OH or epoxy-functional groups of resin (b).

11. The coating composition according to claim 10, wherein the hardener comprises an isocyanate-functional compound, an amino resin or a phenolic resin.

12. The coating composition according to claim 10 or 11, provided in the form of a 2K coating composition.

13. Method of coating a substrate, comprising applying the coating composition according to any one of claims 10-12 to a substrate and curing the coating composition.

14. Coated substrate obtained according to the method of claim 13.

15. The substrate according to claim 14, wherein the substrate is selected from the group consisting of polycarbonate acrylonitrile butadiene styrene (PC/ABS), polycarbonate, polyacrylate, polyolefin, polystyrene, polyamide, glass, wood, steel, aluminum, and aluminum alloys.

## Patentansprüche

1. Hydroxylfunktioneller Polyester mit einem Perfluorpolyether-Block, hergestellt durch ein Verfahren, das die folgenden Schritte umfasst:
(a) Umsetzen eines carboxylterminierten Perfluorpolyethers C mit einer epoxidfunktionellen Verbindung D und
(b) Umsetzung des Umsetzungsprodukts aus Schritt a) mit einem Lacton E.

2. Polyester nach Anspruch 1, wobei der carboxylterminierte Perfluorpolyether C durch eine Kondensationsreaktion eines hydroxylterminierten Perfluorpolyethers A mit Verbindung B, bei der es sich um ein multifunktionelles Anhydrid mit einer Funktionalität von mindestens 2 handelt, erhalten wird.

3. Polyester nach Anspruch 2, wobei Verbindung A eine allgemeine Struktur
HO-(CH₂CH₂O)ₚ-CH₂-CF₂-R_{f}-CF₂-CH₂-(OCH₂CH₂)_{q}-OH
aufweist, wobei p und q für ganze Zahlen stehen, die unabhängig aus 0 bis 50 ausgewählt sind, R_{f} für einen bifunktionellen Rest mit Perfluorpolyether-Struktur (CF₂CF₂O)ₙ, (CF₂O)ₘ oder (CF₂-CF₂-O)ₙ-(CF₂-O)ₘ steht, wobei n und m für ganze Zahlen stehen, die unabhängig aus 1 bis 100 ausgewählt sind.

4. Polyester nach einem der Ansprüche 2-3, wobei es sich bei Verbindung B um Trimellitsäureanhydrid oder hydriertes Trimellitsäureanhydrid handelt.

5. Polyester nach einem der Ansprüche 1-4, wobei der carboxylfunktionelle Perfluorpolyether C eine durch potentiometrische Titration gemäß DIN EN ISO 3682 gemessene Säurezahl im Bereich von 10 bis 50 mg KOH/g aufweist.

6. Polyester nach einem der Ansprüche 1-5, wobei es sich bei der epoxidfunktionellen Verbindung D um einen Glycidylether oder Glycidylester handelt.

7. Polyester nach einem der Ansprüche 1-6, wobei es sich bei Verbindung E um ein γ-Lacton, δ-Lacton oder ε-Lacton handelt.

8. Polyester nach Anspruch 7, wobei es sich bei Verbindung E um ε-Caprolacton handelt.

9. Polyester nach einem der Ansprüche 1-7, wobei der hydroxylfunktionelle Polyester eine durch potentiometrische Titration unter Verwendung der TSI-Methode gemäß ASTM E1899-08 gemessene OH-Zahl von 10-150 mg KOH/g Harz aufweist.

10. Beschichtungszusammensetzung, umfassend:
(a) den Polyester nach einem der Ansprüche 1-9,
(b) ein OH-funktionelles oder epoxidfunktionelles Harz und
(c) einen Härter mit Gruppen, die gegenüber den OH- oder epoxidfunktionellen Gruppen von Harz (b) reaktiv sind.

11. Beschichtungszusammensetzung nach Anspruch 10, wobei der Härter eine isocyanatfunktionelle Verbindung, ein Aminoharz oder ein Phenolharz umfasst.

12. Beschichtungszusammensetzung nach Anspruch 10 oder 11, bereitgestellt in Form einer 2K-Beschichtungszusammensetzung.

13. Verfahren zum Beschichten eines Substrats, bei dem man die Beschichtungszusammensetzung nach einem der Ansprüche 10 bis 12 auf ein Substrat aufbringt und die Beschichtungszusammensetzung härtet.

14. Beschichtetes Substrat, erhalten nach dem Verfahren von Anspruch 13.

15. Substrat nach Anspruch 14, wobei das Substrat aus der Gruppe bestehend aus Polycarbonat/Acrylnitril-Butadien-Styrol (PC/ABS), Polycarbonat, Polyacrylat, Polyolefin, Polystyrol, Polyamid, Glas, Holz, Stahl, Aluminium und Aluminiumlegierungen ausgewählt ist.

## Revendications

1. Polyester fonctionnalisé par hydroxyle contenant un bloc de perfluoropolyéther préparé par un procédé comprenant les étapes suivantes
(a) soumission d'un perfluoropolyéther terminé par carboxyle C à une réaction avec un composé fonctionnalisé par époxy D, et
(b) soumission du produit de réaction de l'étape a) à une réaction avec une lactone E.

2. Polyester selon la revendication 1, le perfluoropolyéther terminé par carboxyle C étant obtenu par soumission d'un perfluoropolyéther terminé par hydroxy A à une réaction de condensation avec un composé B, qui est un anhydride multifonctionnel doté d'une fonctionnalité d'au moins 2.

3. Polyester selon la revendication 2, le composé A ayant une structure générale
HO-(CH₂CH₂O)ₚ-CH₂-CH₂-R_{f}-CF₂-CH₂-(OCH₂CH₂)_{q}-OH
p et q étant des entiers indépendamment choisis parmi 0 à 50, R_{f} représentant un radical bifonctionnel ayant une structure de perfluoropolyéther (CF₂CF₂O)ₙ, (CF₂O)ₘ ou (CF₂-CF₂-O)ₙ-(CF₂-O)ₘ, n et m étant des entiers indépendamment choisis de 1 à 100.

4. Polyester selon l'une quelconque des revendications 2 et 3, le composé B étant l'anhydride trimellitique ou l'anhydride trimellitique hydrogéné.

5. Polyester selon l'une quelconque des revendications 1 à 4, le perfluoropolyéther fonctionnalisé par carboxyle C ayant un indice d'acide dans la plage de 10 à 50 mg de KOH/g, mesuré par titrage potentiométrique conformément à la norme DIN EN ISO 3682.

6. Polyester selon l'une quelconque des revendications 1 à 5, le composé fonctionnalisé par époxy D étant un éther de glycidyle ou un ester de glycidyle.

7. Polyester selon l'une quelconque des revendications 1 à 6, le composé E étant une γ-lactone, une δ-lactone ou une ε-lactone.

8. Polyester selon la revendication 7, le composé E étant la ε-caprolactone.

9. Polyester selon l'une quelconque des revendications 1 à 7, le polyester fonctionnalisé par hydroxyle ayant un indice d'OH de 10 à 150 mg de KOH/ résine, mesuré par titrage potentiométrique en utilisant le procédé TSI conformément à la norme ASTM E1899-08.

10. Composition de revêtement, comprenant :
(a) le polyester selon l'une quelconque des revendications 1 à 9,
(b) une résine fonctionnalisée par OH ou fonctionnalisée par époxy, et
(c) un agent de durcissement comprenant des groupes réactifs envers les groupes fonctionnels OH ou époxy de la résine (b).

11. Composition de revêtement selon la revendication 10, l'agent de durcissement comprenant un composé fonctionnalisé par isocyanate, une résine amino ou une résine phénolique.

12. Composition de revêtement selon la revendication 10 ou 11, fournie sous la forme d'une composition de revêtement 2K.

13. Procédé de revêtement d'un substrat, comprenant une application de la composition de revêtement selon l'une quelconque des revendications 10 à 12 sur un substrat et un durcissement de la composition de revêtement.

14. Substrat revêtu obtenu selon le procédé selon la revendication 13.

15. Substrat selon la revendication 14, le substrat étant choisi dans le groupe constitué par un polycarbonate acrylonitrile butadiène styrène (PC/ABS), un polycarbonate, un polyacrylate, une polyoléfine, un polystyrène, un polyamide, du verre, du bois, de l'acier, de l'aluminium, et des alliages d'aluminium.
